(19) **Europäisches Patentamt**

**European Patent Office**

**Office européen des brevets**

(11) **EP 1 296 093 A1**

(12) **EUROPEAN PATENT APPLICATION**

(43) Date of publication:
   26.03.2003 Bulletin 2003/13

(51) Int Cl.⁷: **F21V 8/00**

(21) Application number: **01122960.6**

(22) Date of filing: **25.09.2001**

(84) Designated Contracting States:
   **AT BE CH CY DE DK ES FI FR GB GR IE IT LI LU
   MC NL PT SE TR**
   Designated Extension States:
   **AL LT LV MK RO SI**

(71) Applicant: **Wintek Corporation
   Taichung Hsien (TW)**

(72) Inventors:
   • **Chien, Hui-Liang
     How Lii, Taichung Hsien (TW)**
   • **Cheng, Chi-Feng
     Tantzu Hsiang, Taichung Hsien (TW)**

(74) Representative: **Viering, Jentschura & Partner
   Postfach 22 14 43
   80504 München (DE)**

(54) **Lighting luminaire using only one light source and forming method thereof**

(57) A lighting luminaire using only lighting element as a light source comprises a light conducting frame (8); a unit lighting element (26) disposed at a position near one corner of the light conducting frame (8), to function as a point light source and a reflector plate provided at the rear surface of the light conducting frame (8). A specially designed pattern (11) is formed on the rear surface of the light conducting frame (8) according to an area distribution function. Moreover, several ramps (12,14,16,22,24) are formed along the inner edge of the light conducting frame (8) so as to further improve uniform distribution of output light. In the invention, a forming method of this lighting luminaire is also disclosed.

FIG. 1

EP 1 296 093 A1

## Description

The present invention relates to a lighting luminaire using only one light source for LCD module and forming method thereof, which is effective in obtaining uniform light distribution with low power consumption.

There are a plurality of light source elements contained in a conventional LCD lighting luminaire. Those lighting elements to be used as a light source are disposed around the inner edges of the lighting luminaire to emit light rays, while a patterned plate is provided at the inner surface of the luminaire to function as a reflector. As the light source is turned on, the emitted light rays are reflected by the patterned reflector and outputted to desired directions according to the pattern on the reflector plate thereof.

As the nature of a lighting element is a point light source whose light intensity is strongest in the forwards direction, but there are almost no light rays emitted to other directions. If there is no properly designed lighting luminaire to be associated with a light source disposed at the center position of the lighting luminaire, it is impossible to obtain a desired uniform light distribution from a planar light source by using only one lighting element. If a plurality of lighting elements or electro-luminesence lamp are employed to obtain uniform lighting effect from a planar light source, there is other problems of high power consumption and electromagnetic interference.

In order to solve the above mentioned problems, the present inventor carried out theoretical studies and simulating experience. Based on these studies and researches, the present inventor came to propose the present invention.

It is an object of the present invention to provide a lighting luminaire using only one light source instead of using four lighting elements or more in a conventional practice so as to save power consumption and eliminate electromagnetic interference.

It is another object of the present invention to provide a lighting luminaire using only one light source wherein ununiformity of light distribution of the lighting luminaire is further improved by forming several ramps along the inner edge of the lighting luminaire.

It is one more object of the present invention to provide design method of this lighting luminaire.

These and other objects of the present invention can be achieved by providing a lighting luminaire comprising a light conducting frame; a unit lighting element disposed at a position near one comer of the light conducting frame, to function as a point light source; and a reflector plate provided at the rear surface of the light conducting frame. A specially designed pattern is formed on the rear surface of the light conducting frame according to an area distribution function by laser processing or plastic ejection process. Moreover, several ramps are formed along the inner edge of the light conducting frame so as to further improve uniform distribution of output light.

For fuller understanding of the nature and objects of the invention, reference should be made to the following detailed description taken in conjunction with the accompanying drawings.

Fig. 1 is a front view of a lighting luminaire using only one lighting element in a first embodiment of the present invention;
Fig. 2 is a side view of Fig. 1;
Fig. 3 is a rear view of Fig. 1;
Fig. 4 is a drawing showing the state of light tracks of Fig. 1;
Fig. 5 is a front view of a lighting luminaire using only one lighting element in a second embodiment of the present invention.

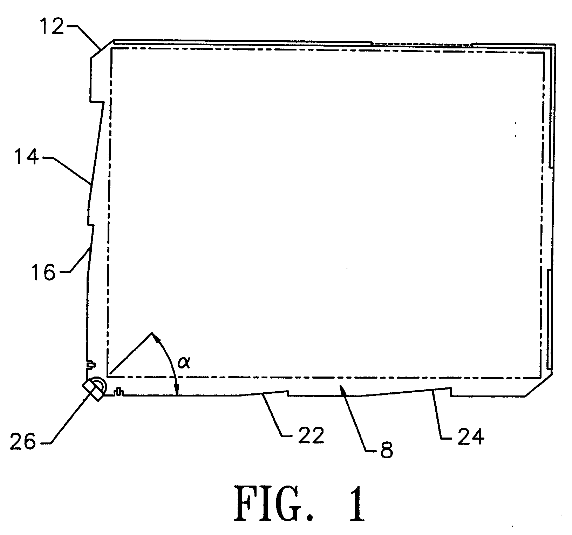

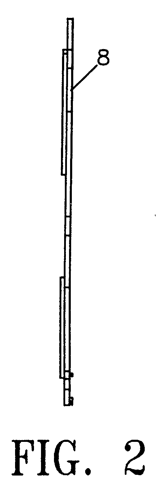

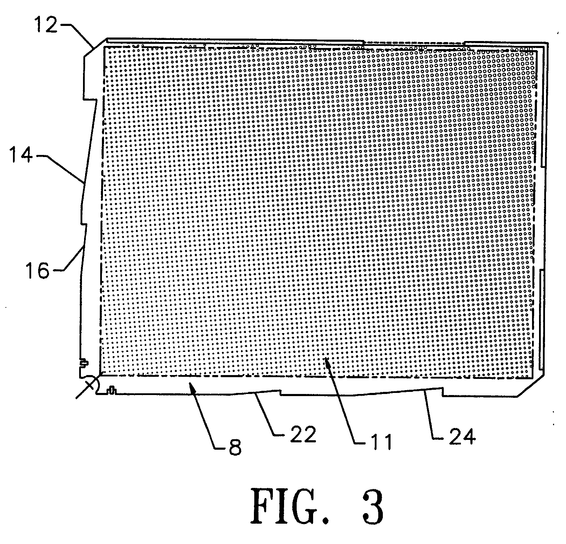

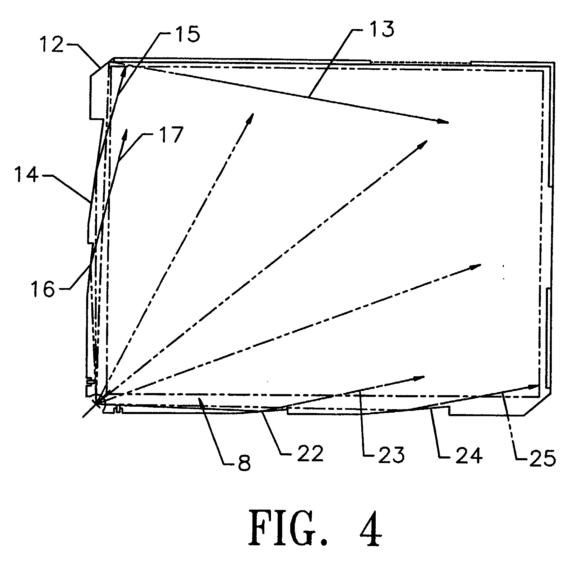

Referring to Figs. 1 through 4 simultaneously, the lighting luminaire of the present invention comprises a light conducting frame 8; a unit lighting element 26 disposed at a position near one comer of the light conducting frame 8, to function as a point light source; and a reflector plate (not shown) provided at the rear surface of the light conducting frame 8. The emitted light from the point light source. i.e. lighting element 26 is conducted into the lighting luminaire along an extended structure of the light conducting frame 8 in diffused state before being outputted. A specially designed pattern 11 is formed on the rear surface of the light conducting frame 8 in accordance with an area distribution function by laser processing, or plastic injection process, or printing process, or extrusion process, or mechanical or exposure processing (see Fig. 3). The form of mesh distribution in this pattern 11 is different from that according to conventional techniques in the way that variation of mesh density of the pattern 11 is in a defined relation with a main axis along a line forming an angle $\alpha$ with the horizontal line (x-axis) assuming point light source 26 is located at the origin of coordinate. The value of $\alpha$ is generally $20°\sim70°$. Several ramps 12, 14, 16, 22, 24 are formed along the inner edge of the light conducting frame 8 so as to capture and reflect the biased light rays into effective directions 13, 15, 17, 23, 25, etc. thereby eliminating unlighted dark space as shown in Figs. 3 and 4. In this version the lighting luminaire of the present invention is able to become a uniform planar light source. The tilted angle of ramps is variable from 5° to 60° depending on the contour and dimension of the lighting luminaire.

In an embodiment of the present invention shown in Fig. 1, the meshes formed by sand spraying gradually from sparse and dense away from the point light source are finer than being formed by etching such that the fine meshes can serve to prevent the light from random reflection during proceeding to the light conducting frame 8 and reflecting from the reflector plate at the rear surface of the light conducting frame 8 to the front direction so as to improve light intensity and uniformity (see Fig. 3)

As it is illustrated above, the variation of mesh density of the pattern 11 is in a defined relation with a main axis along a line forming an angle of $\alpha$ (20° ~70°) with the X axis. The mathematical analysis is shown below:

$$A1(x)=a1(y)*e^{b1(y)*x} \qquad (1)$$

$$A2(x)=a2(y)*e^{b2(y)*x} \qquad (2)$$

Wherein An(x) represents ratio of area distribution at the center portion of the pattern to the entire vision area (n=1, or 2), X represents the distance from the light source 26 to the above center-portion.

L represents the distance from the light source 26 to the opposite corner of the light conducting frame 8, an(y) and bn(y) are both the functions of L, wherein,

$$b(L)=D(L)*e^{-c1*L} \qquad (3)$$

$$b1(y)=b(L)*e^{(-c2*y)} \qquad (4)$$

$$b2(y)=b(L)*e^{(-c3*y)} \qquad (5)$$

$$[dA(x)/dx]*L= c4 \qquad (6)$$

$$an(y)=A1(L)/e^{(bn(y)*L)} \qquad (7)$$

$$An(L)=A(L)*b(L)/bn(y) \qquad (8)$$

wherein D(L) is a function related to the depth of center point of said pattern and L, for a common I mm thick plate, the average depth of a mesh is 20~30μm, then D(L) equals o.1, c2 equals 0.0179, c3 equals 0.01, c4 equals 0.5~0.7.L is defined as the distance from a point near the light source to the most distal point in the vision area along the main axis forming a specified angle with the horizontal line (X-axis).

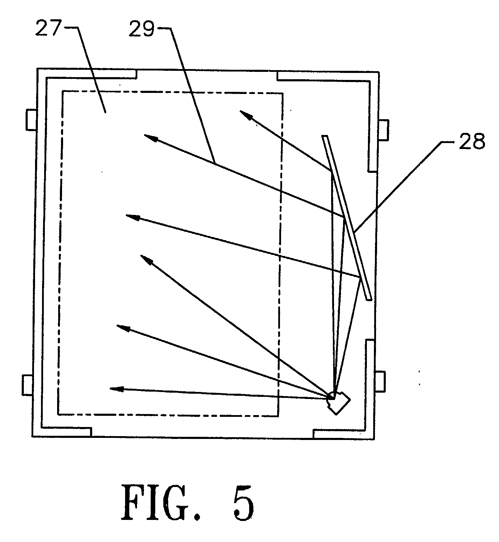

Here, in another embodiment of the present invention shown in Fig. 5, an empty cavity 28 is formed in the light conducting frame 8 to reflect the light 29 which is excursing away from the vision area 27 such that the excursed light 29 is effectively captured into the vision area 27 thereby increasing the light intensity and improving light uniformity thereof.

As for the steps of forming method of the present invention comprising the steps:

a) disposing a point light source 26 near the corner of a light conducting frame 8;
b) forming a specially designed pattern 11 on the year surface of the light conducting frame 8 according to an area distribution function; and
c) forming several ramps 12, 14, 16, 22, 24 along the inner edge of the light conducting frame 8 so as to capture and reflect the stray light trays 13, 15, 17, 23, 25 into desired directions.

It emerges from the description of the above embodiments that the invention has several noteworthy advantages, in particular:

1. Only one lighting element is used as a point light source instead of using a plurality of lighting elements as in a conventional practice so as to save power consumption and eliminate electromagnetic interference.
2. Several ramps are formed along the inner edge of the light conducting frame to capture and reflect stray light rays into effective directions thereby further improving the lighting efficiency and uniformity.
3. A lighting luminaire with specially designed reflector patterns caused it able to use a point light source to serve an equivalent effectiveness of a planar light source with a simple structure and a minimum cost.

Those who are skilled in the art will readily perceive how to modify the invention. Therefore the appended claims are to be construed to cover all equivalent structures which fall within the true scope and spirit of the invention.

**Claims**

1. A lighting luminaire using only one lighting element as a light source comprising:

   a light conducting frame;
   a unit lighting element disposed at a position near one comer of said light conducting frame, to function as a point light source; and
   a reflector plate provided at the rear surface of said light conducting frame,
   a specially designed pattern is formed on the rear surface of said light conducting frame according to an area distribution function by laser processing or plastic ejection processing, and several ramps are formed along the inner edge of said light conducting frame so as to further improve uniform distribution of output light.

2. The lighting luminaire of claim 1, wherein said point light source is disposed at a position near one corner of said light conducting frame.

**3.** The lighting luminaire of claim 1, wherein the emitted light from said point light source is conducted into said lighting luminaire along an extended structure of said light conducting frame in diffused state before being outputted.

**4.** The lighting luminaire of claim 1 wherein said ramps formed along the inner edge of said light conducting frame are with a tilted angle between 5° and 60° used for capturing and reflecting biased light rays into effective directions thereby eliminating unlighted dark space.

**5.** The lighting luminaire of claim 1, wherein an empty cavity is formed in said light conducting frame to reflect the light which is excursing away from the vision area such that the excursed light is effectively conducted into the vision area.

**6.** A forming method of a lighting luminaire using only one light source comprising the steps:

a) disposing a point light source near the corner of a light conducting frame;
b) forming a specially designed pattern on the rear surface of said light conducting frame according to an area distribution function; and
c) forming several ramps along the inner edge of said light conducting frame so as to capture and reflect the stray light rays into effective directions.

**7.** The forming method of claim 6, wherein the variation of mesh density of said pattern is in a defined relation with a main axis along a line forming an angle of $\alpha$ (20°~70°) with the X axis assuming:

$$A1(x)=a1(y)*e^{b1(y)*x} \qquad (1)$$

$$A2(x)=a2(y)*e^{b2(y)*x} \qquad (2)$$

wherein An(X) represents ratio of occupied area at the center portion of said pattern to the entire vision area (n=1, or 2), X represents the distance from said light source to the above center portion, L represents the distance from said light source to the opposite comer of said light conducting frame, an(y) and bn(Y) are both the functions of L, wherein

$$b(L)=D(L)*e^{-c1*L} \qquad (3)$$

$$b1(y)=b(L)*e^{(-c2*y)} \qquad (4)$$

$$b2(y)=b(L)*e^{(-c3*y)} \qquad (5)$$

$$[dA(x)/dx]*L=c4 \qquad (6)$$

$$an(y)=A1(L)/e^{(bn(y)*L)} \qquad (7)$$

$$An(L)=A(L)*b(L)/bn(y) \qquad (8)$$

wherein D(L) is a function related to the depth of center point of said pattern and L, for a common 1 mm thick plate, the average depth of a mesh is 20~30µm, then D(L) equals o.1, c2 equals 0.0179, c3 equals 0.01, c4 equals 0.5~0.7.L is defined as the distance from a point near the light source to the most distal point in the vision area along the main axis forming a specified angle with the horizontal line (X-axis).

FIG. 1

FIG. 2

FIG. 3

FIG. 4

FIG. 5

**European Patent Office** **EUROPEAN SEARCH REPORT**

Application Number

EP 01 12 2960

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 781 959 A (AT & T CORP) 2 July 1997 (1997-07-02) * abstract; claims 1-10; figures 1-9 * | 1,6 | F21V8/00 |
| A | US 6 036 327 A (WONG YIU-HUEN ET AL) 14 March 2000 (2000-03-14) * abstract; claims 1-40; figures 1-9 * | 1,6 | |

TECHNICAL FIELDS SEARCHED (Int.Cl.7)

F21V

The present search report has been drawn up for all claims

| Place of search | Date of completion of the search | Examiner |
|---|---|---|
| THE HAGUE | 16 January 2002 | Malic, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 12 2960

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2002

| Patent document cited in search report | | Publication date | Patent family member(s) | | Publication date |
|---|---|---|---|---|---|
| EP 0781959 | A | 02-07-1997 | EP<br>JP | 0781959 A1<br>9274445 A | 02-07-1997<br>21-10-1997 |
| US 6036327 | A | 14-03-2000 | NONE | | |

EPO FORM P0459

For more details about this annex : see Official Journal of the European Patent Office, No. 12/82